# DEMANDE DE BREVET EUROPEEN

(11) **EP 4 575 287 A1**
(43) Date de publication de la demande: **25.06.2025**
(21) Numéro de dépôt: 24221150.6
(22) Date de dépôt: 18.12.2024
(51) Int. Cl.: F16L 3/08, B60R 16/02, F16L 3/137, F16L 55/035, H02G 3/32, F17C 13/00, F17C 13/08, G01D 11/30, G01K 1/14, G01M 3/04

(54) **UN DISPOSITIF DE MONTAGE POUR MONTER UN ACCESSOIRE SUR UNE BANDE DE CERCLAGE ET ENSEMBLE D'UN TEL DISPOSITIF ET D'UNE BANDE DE CERCLAGE**

(30) Priorité: 21.12.2023 FR 2314918
(71) Demandeur: Caillau, 41200 Romorantin-Lanthenay (FR)
(72) Inventeur: BLANCHET, Martial, 41200 Romorantin-Lanthenay (FR); IBANEZ, Leny, 41210 Marcilly en Gault (FR)
(74) Mandataire: Cabinet Beau de Loménie

(57) **Abrégé**

Le dispositif de montage (12) pour monter un accessoire (14) sur une bande de cerclage (10) comprend une bande de support (22) comprenant une zone de fixation (24) pour un accessoire, un système de coulisseau (28A, 28B, 30A) pour retenir la bande de support par rapport à la bande de cerclage tout en permettant le coulissement de la bande de support le long de la bande de cerclage et un système de verrouillage (40) pour bloquer ce coulissement dans une position donnée de la bande de support par rapport à la bande de cerclage.

## Description

### Domaine Technique

L'exposé se rapporte à un dispositif de montage pour monter un accessoire sur une bande de cerclage.

La bande de cerclage est en particulier disposée autour d'un objet tel qu'un tube ou une portion d'enceinte. Notamment, l'enceinte peut être un réservoir stockant du fluide, en particulier un réservoir contenant un gaz tel que de l'hydrogène. L'accessoire peut être un élément fonctionnel devant coopérer avec l'objet autour duquel est disposée la bande de cerclage et/ou l'accessoire peut être ou peut comprendre un capteur servant à détecter des paramètres physico-chimiques dans l'environnement de l'objet ou sur l'objet. Par exemple, ce capteur peut être un capteur de température ou de pression. Il peut également s'agir d'un capteur de fuites, servant à détecter une variation de pression locale ou servant à détecter la présence d'un agent chimique, en particulier un gaz, dans l'environnement de l'objet.

### Exposé de l'invention

L'exposé vise à permettre d'utiliser la bande de cerclage pour porter l'accessoire en le disposant à proximité immédiate de l'objet.

Ainsi, selon un premier objet, l'invention concerne un dispositif de montage pour monter un accessoire sur une bande de cerclage, le dispositif comprenant une bande de support comprenant une zone de fixation pour un accessoire, un système de coulisseau pour retenir la bande de support par rapport à la bande de cerclage tout en permettant le coulissement de la bande de support le long de la bande de cerclage et un système de verrouillage pour bloquer ce coulissement dans une position donnée de la bande de support par rapport à la bande de cerclage ; la bande de support est disposée à l'extérieur de la bande de cerclage et un espace creux est ménagé entre la face interne de la zone de fixation et la face externe de la bande de cerclage.

Grâce à l'invention, on peut déplacer la bande de support sur la bande de cerclage jusqu'à ce qu'elle parvienne dans la position donnée, dans laquelle elle peut être retenue bloquée. La position donnée peut être une position unique, prédéterminée sur la bande de cerclage. La position donnée peut également être une position dans laquelle on souhaite placer la bande de support par rapport à la bande de cerclage, en fonction du positionnement souhaité pour l'accessoire. On peut également prévoir que la bande de cerclage présente plusieurs zones cibles dans lesquelles le blocage de la bande de support est possible, et que la position donnée soit définie par l'une de ces zones cibles, choisie en fonction du contexte. Ce contexte peut en particulier se rapporter à la facilité de montage de l'accessoire, à son accessibilité, ou à son positionnement dans une région déterminée de l'objet sur lequel est disposée la bande de cerclage, par exemple à proximité d'une zone à risque du point de vue des fuites, d'une variation de pression ou d'une variation de température.

La bande de cerclage peut être mise en place sur l'objet alors qu'elle porte la bande de support ou bien la bande de support peut être rapportée sur la bande de cerclage alors qu'elle est en place sur l'objet. Dans les deux cas, une fois la bande de cerclage positionnée sur l'objet, la bande de support peut être amenée à la position donnée pour permettre que l'accessoire soit correctement positionné.

La bande de support est située à l'extérieur de la bande de cerclage. Grâce à l'espace creux ménagé entre ces deux bandes dans la région de la zone de fixation, le montage de l'accessoire est facilité et ce montage peut être réalisé sans appui contre la bande de cerclage et sans interférer avec le serrage de cette bande sur l'objet à serrer. De plus, la bande de support peut être capable de coulisser par rapport à la bande de cerclage, même lorsque l'accessoire est monté ou pré-monté sur la bande de cerclage.

Optionnellement, le système de coulisseau comprend au moins une paire de pattes de coulissement, qui comprend deux pattes de coulissement portées par une zone de coulissement de la bande de support, ces pattes de coulissement étant espacées l'une de l'autre dans une direction de largeur et présentant des extrémités repliées sous la bande de support en ménageant un espace entre elles et la face interne de la bande de support, le système de coulisseau comprenant optionnellement deux paires de pattes de coulissement respectivement disposées de part et d'autre de la zone de fixation.

Optionnellement, la zone de fixation est en saillie radiale vers l'extérieur par rapport à la zone de coulissement en étant optionnellement formée dans une portion de la bande de support qui est déformée radialement vers l'extérieur.

Optionnellement, la zone de fixation comprend au moins un orifice de fixation, en particulier un orifice de vissage, notamment un orifice présentant un collet taraudé ou un orifice en registre avec l'orifice taraudé d'un écrou.

Optionnellement, la bande de support comprend une portion de blocage qui présente un premier organe de verrouillage, le premier organe de verrouillage comprenant en particulier une ouverture, une cuvette, un bossage ou une patte de verrouillage.

Optionnellement, le premier organe de verrouillage est sollicité en permanence dans une configuration de verrouillage.

Optionnellement, la portion de blocage est configurée pour être déplacée élastiquement, en particulier pour être déformée élastiquement, pour déverrouiller le premier organe de verrouillage de manière à débloquer le coulissement.

Optionnellement, la bande de support comprend une languette de déverrouillage, configurée pour être manipulée de manière à déverrouiller le système de verrouillage pour débloquer le coulissement.

Optionnellement, la languette de déverrouillage est relevée radialement par rapport à la portion de blocage.

Selon un deuxième objet, l'invention concerne un ensemble de fixation comprenant une bande de cerclage et un dispositif de montage tel que défini selon le premier objet de l'invention. La bande de cerclage est optionnellement une bande de serrage d'un collier de serrage.

Optionnellement, les bords de la bande de cerclage sont insérés dans l'espace ménagé entre les extrémités repliées des pattes de coulissement et la face interne de la bande de support.

Optionnellement, la bande de cerclage présente une pluralité de deuxièmes organes de verrouillage pour coopérer avec le premier organe de verrouillage, les deuxièmes organes de verrouillage étant répartis sur au moins une partie de la longueur de la bande de cerclage, les premier et deuxièmes organes de verrouillage étant en particulier des organes mâle/femelle conjugués.

Optionnellement, la bande de cerclage présente une rainure sur chacun de ses bords longitudinaux.

Optionnellement, la bande de cerclage présente, sur ses bords longitudinaux, des rebords relevés sous lesquels sont formées les rainures.

Optionnellement, la bande de cerclage comprend une bande interne et une bande externe, la bande externe dépassant latéralement par rapport à la bande interne de manière à former la rainure sur chacun des bords longitudinaux de la bande de cerclage. Dans ce cas, optionnellement, la bande externe est métallique, tandis que la bande interne est en polymère. La bande de cerclage peut avoir pour seule fonction de porter l'accessoire, via la bande de support. Cependant, elle peut également avoir une autre fonction, comme par exemple le fait de rigidifier ou consolider localement l'objet qu'elle cercle, ou bien de permettre la fixation de cet objet sur un support tel que, par exemple, le châssis d'un véhicule. Il peut s'agir d'une bande de serrage visant non seulement à cercler l'objet, mais encore à exercer sur lui des contraintes de serrage, par exemple pour son montage et son maintien en position sur un support ou encore pour son raccordement avec un autre objet. L'objet qui est cerclé par la bande de cerclage peut avoir, dans sa région autour de laquelle est disposée la bande de cerclage, la forme d'un cylindre de révolution, ou bien une autre forme, par exemple une forme parallélépipédique ou bien, de manière générale, une forme définissant un contour fermé, avec ou sans méplats.

### Brève description des dessins

L'exposé sera bien compris et ses avantages apparaîtront mieux à la lecture de la description détaillée qui suit, de modes de réalisation représentés à titre d'exemples non limitatifs. La description se réfère aux dessins annexés sur lesquels :
[Fig. 1] est une vue générale de côté de l'ensemble comprenant une bande de cerclage et un dispositif de montage selon l'invention.
[Fig. 2] est une vue agrandie en perspective, montrant le dispositif de montage, monté sur la bande de cerclage dont seule une portion est représentée.
[Fig. 3] est une vue en perspective de la bande de support du dispositif de montage selon un exemple, cette bande étant vue de l'extérieur.
[Fig. 4] est une vue en perspective de la bande de support de la figure 3, vue de l'intérieur.
[Fig. 5] montre la bande de support selon une variante, dans une vue de côté, c'est-à-dire une vue sur laquelle la direction perpendiculaire au plan de la figure est la direction transversale.
[Fig. 6] est une vue partielle en perspective coupée, montrant la bande de cerclage et sa coopération avec la bande de support.
[Fig. 7] est une vue en coupe transversale à la bande de cerclage, montrant sa coopération, avec la bande de support.
[Fig. 8] est une vue analogue à la figure 7, pour une variante de réalisation.
[Fig. 9] est une vue en perspective montrant, selon une variante, une partie de la bande de cerclage et la bande de support qui, pour la clarté de la figure, est montrée non montée sur la bande de cerclage.
[Fig. 10] est une vue en perspective montrant, selon une autre variante, une partie de la bande de cerclage et la bande de support.

### Description des modes de réalisation

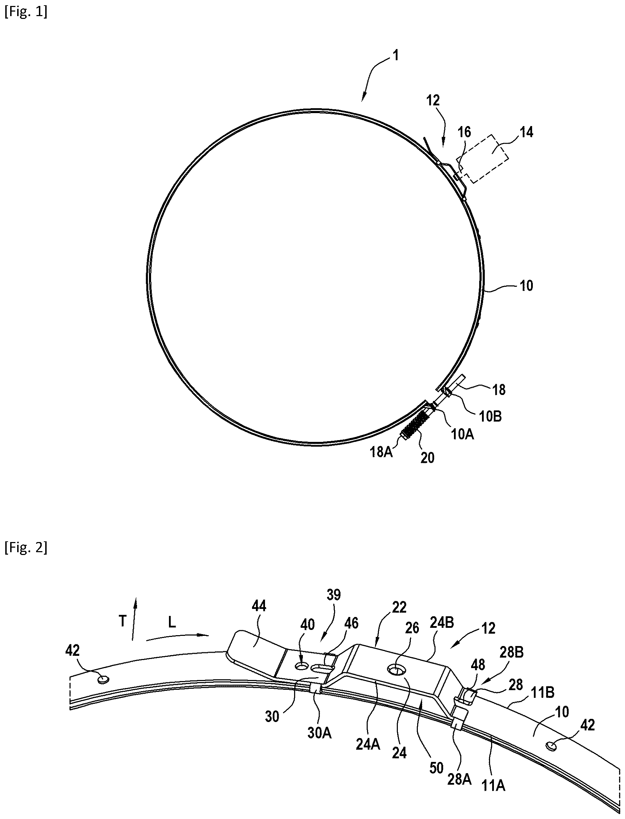

La figure 1 montre un collier de serrage 1 qui comprend une bande de cerclage 10 et un dispositif de montage 12 pour monter un accessoire 14. L'accessoire est représenté en trait interrompu et schématisé par un bloc. En l'espèce, il est fixé au dispositif de montage 12 par une tige filetée 16 vissée dans le dispositif de montage.

Au sens du présent exposé, la direction longitudinale est la direction de la longueur de la bande de cerclage, considérée lorsqu'on parcourt cette bande de l'une de ses extrémités 10A et 10B à l'autre de ses extrémités. La direction de largeur ou direction transversale T est la direction perpendiculaire à cette direction longitudinale mesurée en ligne droite d'un bord longitudinal à l'autre de la bande de cerclage.

La bande de support 22 est allongée globalement dans le même sens que la bande de cerclage 10, de sorte que ses directions longitudinale et transversale sont les mêmes que celles de la bande de cerclage et sont constatées lorsque la bande de support est montée sur la bande de cerclage.

Au sens du présent exposé, la direction vers l'intérieur est celle qui est dirigée vers l'intérieur de la bande de cerclage c'est-à-dire que, lorsque la bande de cerclage est disposée autour d'un objet, cette direction vers l'intérieur va de la bande de cerclage vers l'objet qu'elle cercle. De même, la direction vers l'intérieur s'agissant de la bande de support est constatée lorsque cette bande est montée sur la bande de cerclage. La direction vers l'extérieur est la direction opposée.

Au sens du présent exposé, la direction radiale est celle qui, en supposant que la bande de cerclage définirait un cercle, est orientée globalement radialement par rapport à ce cercle.

Le collier de serrage 1 est en l'espèce un collier à vis, la bande de cerclage 10 présentant deux extrémités 10A et 10B coopérant avec une vis de serrage 18. En l'espèce, les extrémités 10A et 10B forment des oreilles redressées, la vis 18 étant vissée dans l'extrémité 10B pourvue à cet effet d'un écrou, tout et étant retenue par rapport à l'extrémité 10B, en l'espèce via un ressort 20 qui permet à la bande de cerclage de réaliser un serrage autour de l'objet qu'elle cercle, tout en s'adaptant aux variations de dimensions de cet objet. Par exemple, l'objet en question peut être un réservoir à hydrogène dont le contour peut se déformer en fonction de variations de température ou des variations de pression dans le réservoir. Le ressort 20 est en l'espèce un ressort hélicoïdal disposé entre la tête 18A de la vis et l'extrémité 10A du collier.

Bien entendu, d'autres modes de serrage du collier pourraient être envisagés, par exemple un serrage par accrochage des extrémités du collier l'une sur l'autre, une des extrémités ayant une saillie d'accrochage et l'autre un crochet qui s'accroche sur cette saillie. Le collier peut en variante avoir un contour fermé, et pourvoir être serré par contraction d'une portion déformable telle qu'une oreille en saillie radiale. De manière générale, tout type de serrage, est envisageable, en particulier un serrage par vissage, par sertissage, par encliquetage, par accrochage ou encore par déformation plastique.

Par ailleurs, comme indiqué au début du présent exposé, la bande de cerclage peut appartenir à un collier de serrage, ou bien à tout type de dispositif de cerclage. Elle sert à cercler l'objet autour duquel elle est disposée, en appliquant éventuellement mais non obligatoirement un effort de serrage sur cet objet.

La figure 2 montre plus en détail le dispositif de montage 12. On voit qu'il comporte une bande de support 22 comprenant elle-même une zone 24 de fixation pour l'accessoire 14. En l'espèce, cette zone 24 comprend un orifice de fixation 26 qui présente un taraudage permettant de visser la tige filetée 16 de l'accessoire dans cet orifice taraudé pourvu d'un filetage conjugué. Bien entendu, ce mode de fixation n'est qu'un exemple de réalisation. On pourrait également prévoir que l'accessoire soit fixé d'une autre manière, par exemple à l'aide de plusieurs vis, à l'aide d'un système d'accrochage, par exemple en ayant des crochets qui coopèrent avec les bords longitudinaux 24A et 24B de la zone de fixation 24, par clipsage, ou encore par soudure ou clinchage. Une fixation amovible sera cependant préférée, en particulier un vissage comme représenté, ou bien un accrochage ou encore un clipsage.

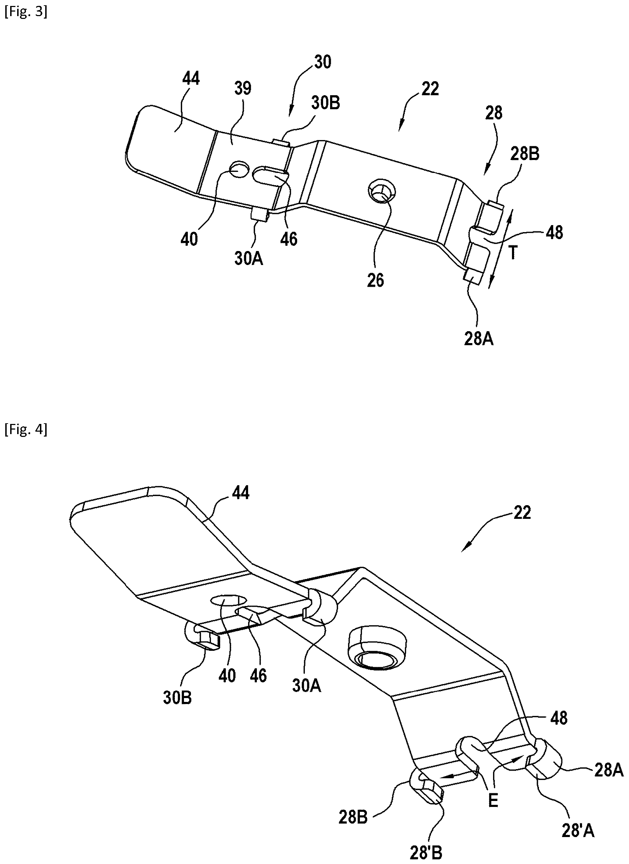

Le dispositif de montage 12 comprend un système de coulisseau pour retenir la bande de support 22 par rapport à la bande de cerclage 10. En l'espèce, comme on le voit mieux sur les figures 3 et 4, la bande de support présente des pattes de coulissement. En l'espèce, deux paires de pattes de coulissement, respectivement 28A, 28B et 30A, 30B sont prévues, chacune dans une zone de coulissement de la bande de support, respectivement 28 et 30. Ces paires sont analogues. Si l'on s'intéresse par exemple à la paire de pattes de coulissement 28A, 28B, on voit qu'elle comprend deux pattes portées par la zone de coulissement 28 de la bande de support 22, ces pattes étant espacées l'une de l'autre dans une direction T de largeur et présentant des extrémités 28'A, 28'B repliées sous la bande de support 22 tout en ménageant entre elles et la face interne de la bande de support un espace E. Plus précisément, l'espace E est ménagé entre les extrémités repliées 28'A, 28'B et zones de la face interne de la bande de support situées en regard de ces extrémités repliées.

Les deux pattes de coulissement 28A et 28B sont espacées l'une de l'autre dans le sens de la direction de largeur T. Ainsi, ces deux pattes viennent se positionner de part et d'autre des deux bords longitudinaux 11A et 11B de la bande de cerclage 10. L'espace E ménagé entre les extrémités repliées 28'A et 28'B des pattes de coulissement et la face interne de la bande de support 22 sert à recevoir les bords 11A et 11B de la bande de cerclage.

La hauteur radiale de l'espace E est au moins égale à l'épaisseur des bords 11A, 11B de la bande de cerclage, cette épaisseur étant mesurée radialement. La hauteur radiale de l'espace E peut être légèrement supérieure à cette épaisseur, de manière à s'accommoder à la courbure de la bande de cerclage.

En l'espèce, comme indiqué, le système de coulisseau présente deux paires de pattes de coulissement. Ainsi, lorsque la bande de support est montée sur la bande de cerclage, les pattes de coulissement de ces deux paires viennent en prise avec les bords de la bande de cerclage dans deux zones espacées longitudinalement. Les deux paires de pattes de coulissement sont disposées l'une par rapport à l'autre en tenant compte de la courbure de la bande de cerclage pour favoriser un coulissement aisé. Par exemple, la bande de support 22 peut suivre la courbure de la bande de cerclage 10, ce qui signifie ici que les zones de coulissement 28 et 30 sont disposées l'une par rapport à l'autre en suivant cette courbure. Les paires 28A, 28B d'une part et 30A, 30B d'autre part sont disposées de part et d'autre de la zone de fixation 24.

Le dispositif de montage 12 comprend également un système de verrouillage pour bloquer le coulissement de la bande de support par rapport à la bande de cerclage. En l'espèce, ce système de verrouillage comprend une ouverture 40 formée dans la bande de support, ouverture dans laquelle peuvent pénétrer des pions 42 formés en saillie sur la face externe de la bande de cerclage 10. Au sens du présent exposé, l'ouverture 40 forme un premier organe de verrouillage, et les pions 42 forment un deuxième organe de verrouillage. On comprend que lorsque la bande de support 22 est déplacée en coulissement sur la bande de cerclage 10, elle peut être bloquée dans la position choisie lorsque l'un des pions 42 vient se positionner dans l'ouverture 40.

De manière générale, selon un aspect de l'invention, le premier organe de verrouillage peut être formé dans une portion de blocage 39 de la bande de support 22. En l'espèce, cette portion de blocage 39 est une zone de la bande de support 22 qui est naturellement plaquée contre la face externe de la bande de cerclage 10. Ainsi, un pion 42 vient naturellement s'insérer dans l'ouverture 40 lorsque cette dernière parvient au droit de ce pion. En ce sens, le premier organe de verrouillage est sollicité en permanence dans une configuration de verrouillage dans laquelle le verrouillage s'opère naturellement dès lors que les premier et deuxième organes de verrouillage atteignent la position relative souhaitée. Cependant, la portion de blocage 39 peut être déplacée élastiquement pour permettre au premier organe de verrouillage d'échapper au verrouillage avec le deuxième organe de verrouillage. En l'espèce, la zone de blocage 39 peut être légèrement relevée radialement vers l'extérieur pour permettre le déverrouillage ou éviter le verrouillage. Ce déplacement élastique peut prendre la forme d'une déformation élastique. Selon un aspect de l'invention, la bande de support 22 comprend une languette de verrouillage 44 qui est formée à une extrémité de la bande de support adjacente à la portion de blocage 39 et qui est relevée vers l'extérieur. L'opérateur peut ainsi agir sur cette languette pour relever la portion de blocage 39 par rapport à la face externe de la bande de cerclage 10. Selon un aspect, la portion de blocage comprend une lumière 46 située du côté opposé à la languette de déverrouillage 44. Cette lumière 46 forme un allègement de matière qui peut favoriser la déformation élastique de la portion de blocage 39. En l'espèce, la lumière 46 est formée vers la jonction entre la portion de blocage 39 et la zone de fixation 24 de la bande de support 22. En l'espèce, cette lumière est également formée entre les deux pattes de coulissement de l'une des paires de pattes de coulissement. Cette lumière permet d'éviter une rigidité trop grande de la bande de support 22 dans la région de ces pattes de coulissement, de manière à éviter que le coulissement ne se bloque de manière non souhaitée et à conférer aux deux pattes de la paire une capacité à légèrement se déplacer l'une par rapport à l'autre pour éviter les coincements du coulissement. Cette lumière 46 forme également une zone de réception du pion 42 sous la bande de support 22 (de son côté intérieur) dans une région dans laquelle cette bande est proche de la face externe de la bande de cerclage 10, pour éviter le coincement du coulissement lorsque, lors du coulissement, le pion passe dans cette zone. Ainsi, en l'espèce, la lumière 46 est située dans la zone de coulissement 30.

On voit qu'une lumière ou une fente 48 est également située dans la première zone de coulissement 28, entre les pattes de coulissement 28A et 28B, également pour permettre aux deux pattes de cette paire de se déplacer légèrement l'une par rapport à l'autre pour éviter les coincements du coulissement. En outre, comme la lumière 46, cette lumière ou fente 48 forme également une zone de réception du pion 42, lui permettant de passer sous la bande de support sans coincer le coulissement.

En se référant notamment aux figures 1 et 2, on voit que la zone de fixation 24 de la bande de support 22 est formée en saillie radiale vers l'extérieur par rapport aux zones de coulissement 28 et 30. L'espace creux 50 est ménagé entre la face interne de la zone de fixation 24 et la face externe en regard de la bande de cerclage 10. En l'espèce, cet espace creux est situé entre les deux zones de coulissement. Vue depuis l'un des côtés de la bande de cerclage, la zone de fixation a globalement une forme en U dont les deux jambes sont tournées vers l'intérieur et vont en l'espèce en s'écartant légèrement écartées l'une de l'autre alors qu'on s'éloigne de la base du U, base dans laquelle est ménagée l'organe de fixation en lui-même, cet organe de fixation étant ici formé par l'orifice de fixation 26. On voit d'ailleurs que les lumières 46 et 48 s'étendent en partie dans ces jambes (à leurs extrémités opposées à la base du U) pour accueillir la hauteur du pion 42 de manière à éviter les coincements du coulissement de la bande de support 22 sur la bande de cerclage 10.

Comme on le voit notamment sur les figures 2 à 4, cet orifice de fixation 26 présente en l'espèce la forme d'un collet taraudé, les bords de cet orifice étant ramenés radialement de manière à former un manchon cylindrique qui est fileté pour pouvoir coopérer avec la vis de fixation de l'accessoire. En l'espèce, ce manchon est dirigé vers l'intérieur et s'étend dans l'espace creux 50 précité.

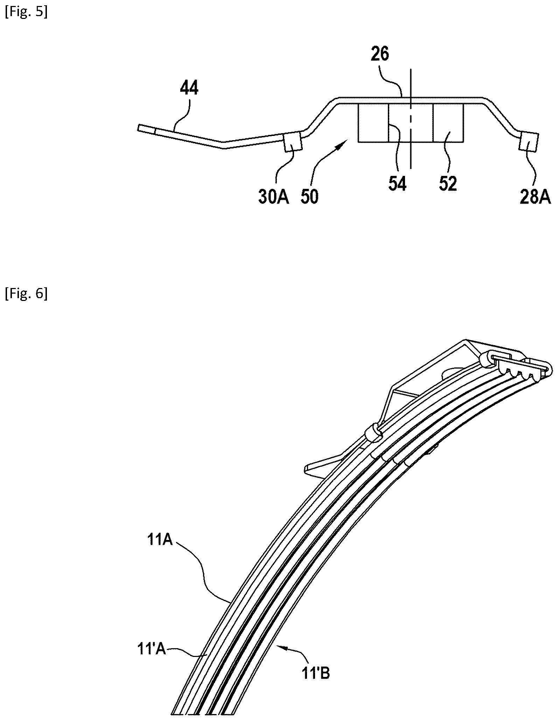

Comme on le montre sur la figure 5, on peut cependant disposer, dans l'espace creux 50, un écrou 52 pourvu d'un perçage fileté 54 en registre avec l'orifice de fixation 26. L'écrou peut être soudé ou fixé de toute autre manière à la face interne ou à la face externe de la zone de fixation 24. On peut préférer, comme dans l'exemple représenter, le placer du côté de la face interne de la zone de fixation 24, dans l'espace 50 précité, auquel cas la zone de fixation 24 en elle-même est peut être prise en sandwich entre cet écrou et l'accessoire 14. Dans ce cas, l'écrou peut ne pas être préalablement fixé à la zone de fixation 24, ou bien peut y être fixé en attente de recevoir l'accessoire, sans que cette fixation ne soit particulièrement résistante. L'écrou 52 peut également servir d'entretoise comblant substantiellement la hauteur radiale de l'espace 50 pour éviter les déformations excessives de la zone de fixation 24.

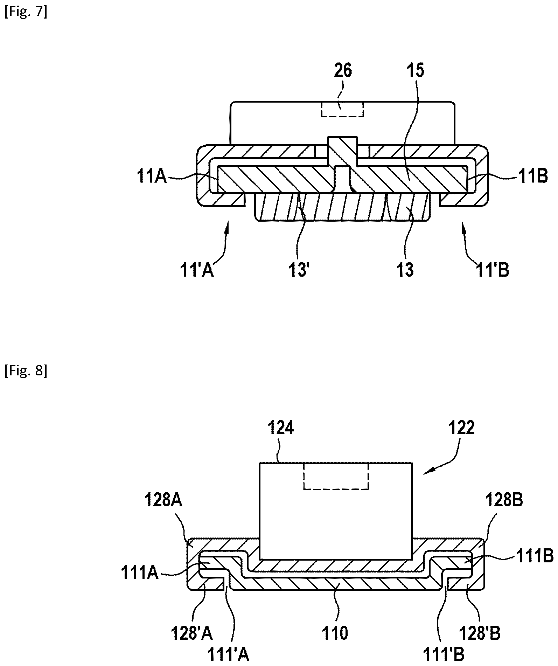

En référence aux figures 6 et 7, on voit que la bande de cerclage 10 présente une rainure, respectivement 11'A et 11'B sur chacun de ses bords longitudinaux 11A, 11B. Les extrémités repliées des pattes de coulissement 28A, 28B, 30A, 30B peuvent donc s'insérer dans ces rainure. Ainsi, le coulissement n'interfère pas avec les interactions de la bande de cerclage avec l'objet qui est cerclé ou serré par cette bande.

En l'espèce, la bande de cerclage comprend une bande interne 13 et une bande externe 15, la bande externe 15 dépassant latéralement par rapport à la bande interne 13, de sorte que les rainures 11'A et 11'B sont formées par ces dépassements. Par exemple, la bande externe peut être une bande métallique, par exemple en inox ou en acier austénitique, alors que la bande interne peut être en matériau polymère, rapporté à l'intérieur de la bande externe, par exemple par collage. Dans ce cas, la bande métallique assure la rigidité du cerclage, tandis que la bande en polymère, qui peut éventuellement être plus épaisse et présenter des rainures 13' longitudinales qui peuvent lui conférer une certaine souplesse, est celle qui coopère avec la périphérie externe de l'objet cerclé. Ainsi, le contact entre la bande de cerclage et l'objet qu'elle cercle est ne blesse pas cet objet et peut s'adapter à de légères irrégularités sur la surface externe de cet objet.

La figure 8 sur laquelle les éléments analogues à ceux des figures 1 à 7 sont désignés par les mêmes références, augmentées de 100. La figure 8 montre une variante de réalisation. dans laquelle la bande de cerclage 110 peut être réalisée en une seule pièce, mais ses bords longitudinaux 111A et 111B peuvent présenter des rebords relevés de manière à former, vus en section transversale, des marches sous lesquelles sont formées les rainures 111'A et 111'B dans lesquelles peuvent pénétrer les extrémités repliées 128'A et 128'B des pattes de coulissement 128A et 128B.

Sur sa face externe, la bande de cerclage 110 peut ainsi présenter une portion centrale en creux par rapport à ces rebords relevés. Comme le montre la figure 8, la bande de support 122 peut, dans les zones de coulissement dans lesquelles sont formées les pattes de coulissement, présenter une portion médiane radialement en retrait vers l'intérieur par rapport aux surfaces externes des pattes de coulissement 128A et 128B, de manière à se positionner dans la zone en creux de la face externe de la bande de cerclage. On pourrait cependant prévoir que, dans cette région, la bande de support ait une section transversale droite, en laissant un vide entre elle et la face externe de la portion en creux de la bande de cerclage. Pour le reste, la bande de support 122 peut être analogue à la bande de support 22 précédemment décrite, et on reconnait notamment la portion de fixation 124 et l'ouverture 126.

Dans ce qui vient d'être décrit en référence aux figures 1 à 8, le premier organe de verrouillage comprend une ouverture 40 dans lequel s'engage un pion 42 de la bande de cerclage. Bien évidemment, l'ouverture peut être remplacée par un bossage dont l'intérieur forme une cuvette recevant le pion 42. Bien entendu, la notion de pion recouvre tout type de saillie radiale, par exemple une patte découpée et redressée.

On peut également, à l'inverse, prévoir que les pions 42 formant les deuxièmes organes de verrouillage soient remplacés par des ouvertures ou des creux formés sur la face externe de la bande de cerclage, et dans lesquelles viendrait s'engager le premier organe de verrouillage, lui-même en saillie sur la face interne de la portion de blocage 39 de la bande de support. Ce premier organe de verrouillage peut alors être formé par un ou plusieurs bossages en saillie sur la face interne de la portion de blocage, formant une cuvette sur la face externe de cette portion de blocage.

On peut également prévoir que les deuxièmes organes de verrouillage soient formés par des encoches formées en retrait dans la direction transversale sur les bords de la bande de cerclage, et que le premier organe de verrouillage comprenne une ou plusieurs pattes formées sur les bords de la portion de blocage, en saillie radiale vers l'intérieur, pour s'engager dans ces indentations. Dans ce cas, la longueur longitudinale des pattes de coulissement peut être supérieure à la longueur mesurée dans le même sens des encoches des bords longitudinaux, de manière à ne pas pénétrer dans ces encoches lors du coulissement de la bande de support sur la bande de cerclage.

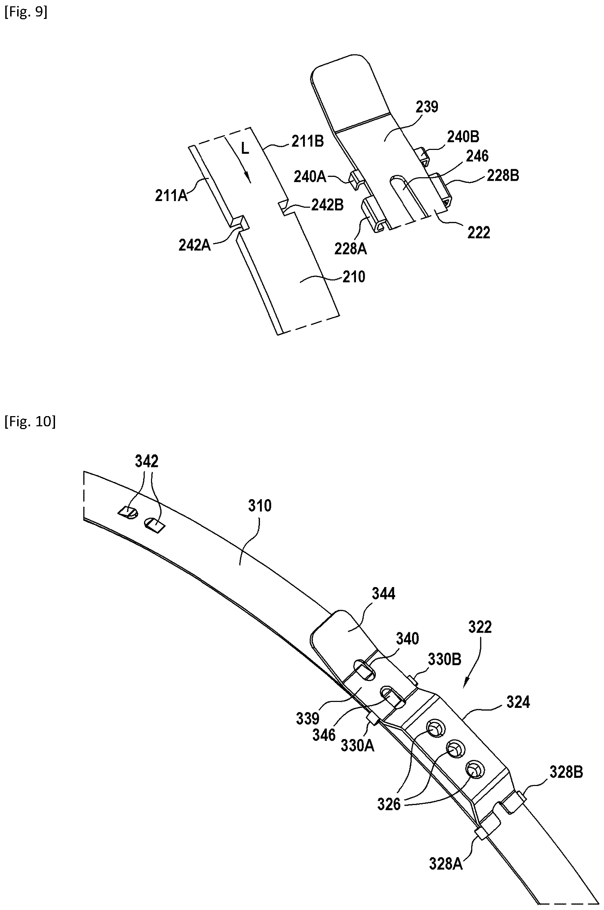

C'est ce que montre schématiquement la figure 9, sur laquelle les éléments analogues à ceux des figures 1 à 7 sont désignés par les mêmes références, augmentées de 200. Sur cette figure, on a représenté une portion de la bande de cerclage 210, sur les bords 211A et 211B de laquelle sont réalisées des encoches 242A et 242B qui forment les deuxièmes organes de verrouillage. Sur la figure 9, on voit également une portion de la bande de support 222, qui présente des premiers organes de verrouillage 240A et 240B formés par des pattes en saillie vers l'intérieur de manière à pouvoir être engagés dans les encoches 242A et 242B. Les pattes de coulissement 228A et 228B dépassent latéralement davantage que les pattes de verrouillage 240A et 240B et sont plus grandes selon la direction longitudinale L, de manière à ne pas pénétrer dans les encoches 242A et 242B. Pour le reste, la bande de cerclage et la bande de support peuvent être analogues à celles des autres exemples. On reconnait notamment la portion de blocage 239 et la lumière 246.

Sur la figure 10, les éléments analogues à ceux des figures 1 à 7 sont désignés par les mêmes références, augmentées de 300. On reconnaît ainsi la bande de support 322 avec ses pattes de coulissement 328A, 328B, 330A et 330B. Sur cette figure, on voit une autre variante pour les organes de verrouillage. En l'espèce, les deuxièmes organes de verrouillage 342 formés sur la bande de cerclage 310 comprennent des crevés, c'est-à-dire des languettes dont les extrémités libres sont partiellement découpées dans la bande de cerclage 310 et qui sont déformées radialement vers l'extérieur. De son côté, la bande de support 322 présente une première ouverture 340 et une deuxième ouverture 346 qui forment ensemble le premier organe de verrouillage, l'ouverture 340 étant entre l'ouverture 346 et la languette 344. On voit deux languettes 342 engagées respectivement dans chacune de ces ouvertures de manière à bloquer la bande 322 dans sa position de blocage. Les extrémités libres de ces languettes forment des arêtes qui permettent le verrouillage en se bloquant contre les bords des ouvertures 340 et 346. L'ouverture 346 peut être analogue à la lumière 46 des figures 1 à 7 et, en plus de former une partie du premier organe de verrouillage, servir aussi à éviter le coincement de la bande de support 322 lorsque, lors de son coulissement sur la bande de cerclage 310, la zone de verrouillage 339 dans laquelle elle est située passe sur les languettes 342. Ainsi, seules les arrêtes de verrouillage de ces languettes retiennent le coulissement, lorsqu'elles butent contre les portions en regard des ouvertures 340 et 346.

Par ailleurs, la variante de la figure 10 se distingue également de celles des figures précédentes par le fait que la portion de fixation 324 présente plusieurs orifices de fixation 326, dans l'espèce trois orifices de fixation pour assurer la fixation avec l'accessoire. Ces orifices peuvent chacun être analogues à l'orifice 26 précédemment décrits et, notamment, avoir des collets taraudés ou être en registre avec les orifices de vissage d'un écrou rapporté.

## Revendications

1. Dispositif de montage (12) pour monter un accessoire (14) sur une bande de cerclage (10, 110, 210, 310), le dispositif comprenant une bande de support (22, 122, 222, 322) comprenant une zone de fixation (24, 324) pour un accessoire (14) et un système de coulisseau (28A, 28B, 30A, 30B, 228A, 228B) pour retenir la bande de support par rapport à la bande de cerclage tout en permettant le coulissement de la bande de support le long de la bande de cerclage, **caractérisé en ce qu'**il comporte en outre un système de verrouillage (40, 240A,240B,340) pour bloquer le coulissement de la bande de support le long de la bande de cerclage dans une position donnée de la bande de support par rapport à la bande de cerclage, et **en ce qu'**un espace creux (50) est ménagé entre la face interne de la zone de fixation (24, 324) et la face externe en regard de la bande de cerclage (10).

2. Dispositif selon la revendication 1, dans lequel le système de coulisseau comprend au moins une paire de pattes de coulissement, qui comprend deux pattes de coulissement (28A,28B, 228A, 228B) portées par une zone de coulissement (28) de la bande de support (22, 122, 222, 322), ces pattes de coulissement étant espacées l'une de l'autre dans une direction de largeur (T) et présentant des extrémités (28'A, 28'B, 128'A, 128'B) repliées sous la bande de support en ménageant un espace (E) entre elles et la face interne de la bande de support, le système de coulisseau comprenant optionnellement deux paires de pattes de coulissement (28A, 28B, 30A, 30B) respectivement disposées de part et d'autre de la zone de fixation.

3. Dispositif selon la revendication 1 ou 2, dans lequel la zone de fixation (24, 324) est en saillie radiale vers l'extérieur par rapport à la zone de coulissement (28, 30) en étant optionnellement formée dans une portion de la bande de support qui est déformée radialement vers l'extérieur.

4. Dispositif selon l'une des revendications 1 à 3, dans lequel la zone de fixation (24, 324) comprend au moins un orifice de fixation (26, 326), en particulier un orifice de vissage, notamment un orifice présentant un collet taraudé ou un orifice en registre avec l'orifice taraudé (54) d'un écrou (52).

5. Dispositif selon l'une des revendications 1 à 4, dans lequel la bande de support (22, 122, 222, 322) comprend une portion de blocage (39, 239)) qui présente un premier organe de verrouillage (40, 240A, 240B), le premier organe de verrouillage étant en particulier une ouverture, une cuvette, un bossage ou une patte de verrouillage.

6. Dispositif selon la revendication 5, dans lequel le premier organe de verrouillage (40, 240A, 240B) est sollicité en permanence dans une configuration de verrouillage.

7. Dispositif selon la revendication 6, dans lequel la portion de blocage (39) est configurée pour être déplacée élastiquement, en particulier pour être déformée élastiquement, pour déverrouiller le premier organe de verrouillage de manière à débloquer le coulissement.

8. Dispositif selon l'une quelconque des revendications 1 à 7, dans lequel la bande de support (22, 122, 222, 322) comprend une languette de déverrouillage (44), configurée pour être manipulée de manière à déverrouiller le système de verrouillage pour débloquer le coulissement.

9. Dispositif selon la revendication 8, prise en combinaison avec la revendication 5, dans lequel la languette de déverrouillage (44) est relevée radialement par rapport à la portion de blocage (39, 239).

10. Ensemble de fixation comprenant une bande de cerclage (10, 110, 210, 310) et un dispositif de montage (12) selon l'une quelconque des revendications 1 à 9, la bande de cerclage étant optionnellement une bande de serrage d'un collier de serrage (1).

11. Ensemble selon la revendication 10, dans lequel le dispositif de montage (12) est selon la revendication 2, et dans lequel les bords (11A, 11B, 11A, 111B) de la bande de cerclage sont insérés dans l'espace ménagé entre les extrémités repliées des pattes de coulissement (28A, 28B, 228A, 228B) et la face interne de la bande de support.

12. Ensemble selon la revendication 10 ou 11, dans lequel le dispositif de montage est selon la revendication 5, et dans lequel la bande de cerclage 10, 110, 210, 310) présente une pluralité de deuxièmes organes de verrouillage (42, 242A, 242B, 342) pour coopérer avec le premier organe de verrouillage, les deuxièmes organes de verrouillage étant répartis sur au moins une partie de la longueur de la bande de cerclage, les premier et deuxièmes organes de verrouillage étant en particulier des organes mâle/femelle conjugués.

13. Ensemble selon l'une quelconque des revendications 10 à 12, dans lequel le dispositif de montage (12) est selon la revendication 6, et dans lequel la portion de blocage (39, 239) est plaquée contre la face externe de la bande de cerclage.

14. Ensemble selon l'une quelconque des revendications 10 à 13, dans lequel la bande de cerclage (10, 110, 310) présente une rainure (11'A, 11'B, 111'A, 111'B) sur chacun de ses bords longitudinaux.

15. Ensemble selon la revendication 14, dans lequel la bande de cerclage (110) présente, sur ses bords longitudinaux (11A, 111B), des rebords relevés sous lesquels sont formées les rainures.

16. Ensemble selon la revendication 14 ou 15, dans lequel la bande de cerclage (10, 210, 310) comprend une bande interne (13) et une bande externe (15), la bande externe dépassant latéralement par rapport à la bande interne de manière à former la rainure sur chacun des bords longitudinaux de la bande de cerclage, et dans lequel, optionnellement, la bande externe est métallique, tandis que la bande interne est en polymère.
